(19) **Europäisches Patentamt / European Patent Office / Office européen des brevets**

(11) **EP 4 567 404 B1**

(12) **EUROPEAN PATENT SPECIFICATION**

(45) Date of publication and mention of the grant of the patent:
**05.11.2025 Bulletin 2025/45**

(21) Application number: **23215298.3**

(22) Date of filing: **08.12.2023**

(51) International Patent Classification (IPC):
**G01N 21/03** *(2006.01)* **G01N 21/3504** *(2014.01)*
**G01N 21/33** *(2006.01)* **G01N 21/39** *(2006.01)*
**G01N 21/61** *(2006.01)*

(52) Cooperative Patent Classification (CPC):
**G01N 21/39; G01N 21/031; G01N 21/3504;**
G01N 21/33; G01N 21/61; G01N 2021/391;
G01N 2021/399

(54) **DEVICE, SYSTEM AND METHOD FOR OPTICAL GAS ANALYSIS**

VORRICHTUNG, SYSTEM UND VERFAHREN ZUR OPTISCHEN GASANALYSE

DISPOSITIF, SYSTÈME ET PROCÉDÉ D'ANALYSE OPTIQUE DE GAZ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**11.06.2025 Bulletin 2025/24**

(73) Proprietor: **Axetris AG**
**6056 Kägiswil (CH)**

(72) Inventors:
• **Losio, Paolo Antonio**
**6048 Horw (CH)**

• **Müller, Pascal**
**6056 Kägiswil (CH)**
• **Wittmann, Andreas**
**6074 Giswil (CH)**

(74) Representative: **Witte, Weller & Partner**
**Patentanwälte mbB**
**Postfach 10 54 62**
**70047 Stuttgart (DE)**

(56) References cited:
WO-A1-2011/151629  CN-A- 112 748 084
CN-A- 115 372 300  DE-B4- 102010 050 626
US-A1- 2020 025 673

**Description**

FIELD OF THE INVENTION

The present invention relates to a device for optical gas analysis. The present invention furthermore relates to a corresponding system and method for optical gas analysis.

BACKGROUND OF THE INVENTION

Optical gas analyzers can use the absorption of light by a gas to determine the concentration of the gas. A measurement gas may also comprise a combination of one or more different gases. Gas analyzers can be used for several applications, for example in industry, for environmental monitoring, and/or for medical applications.

Several gases absorb light in several narrow absorption lines or, in case of larger molecules, in absorption bands. The spectral position of absorption lines or bands is characteristic of each gas. Therefore, it is often possible to identify gases based on their absorption lines or bands. The proportion of light absorbed by a gas depends on the gas itself, on the gas concentration and on the optical path length where light can be absorbed. The Beer-Lambert or Lambert-Beer law is commonly applied to chemical analysis measurements to determine the concentration of chemical species that absorb light. The Beer-Lambert law can thus provide a simplified model by:

$$I(c,\lambda) = I_0 e^{-\alpha(\lambda,c)L}$$

$$\alpha(\lambda,c) = \epsilon(\lambda)c \quad,$$

where $I$ is the light at wavelength $\lambda$ transmitted through the gas cell, $I_0$ is the light intensity at wavelength $\lambda$ before the gas cell, c is the gas concentration by volume, $\alpha(\lambda,c)$ is the absorption coefficient of the gas and L is the optical path length. Knowing the proportion of light absorbed, the wavelength, the specific absorptivity of the gas $\epsilon(\lambda)$, and the optical path length it is possible to determine the gas concentration.

Although the fundamental principle is known in the art, a multitude of different practical realizations exist to determine gas concentrations by optical measurements. Some exemplary measurement principles of different gas analyzers are NDIR (Non-Dispersive Infrared), TDLS (Tunable Diode Laser Spectroscopy), and in few cases NDUV (Non-Dispersive Ultraviolet).

NDIR may use a thermal emitter, like a light bulb or heated filament or heated membrane as an infrared light source. Such sources may be denoted as blackbody emitters because their spectrum may approximate a black-body spectrum as described by Plank's law. An exemplary light source for NDIR may emit infrared radiation in a wavelength range e.g., from 2 $\mu$m to 5 $\mu$m or even

to longer wavelengths up to e.g., 14 $\mu$m. Target gas molecules may strongly absorb light at specific wavelengths within the range of emitted wavelengths. For detection, one or more narrow bandpass filters may be used to select wavelengths of interest and reference wavelengths. In general, NDIR systems are considered to be comparatively low cost but may provide a medium to low performance, which may nevertheless be sufficient for many applications.

Tunable diode laser absorption spectroscopy (TDLS, also referred to as TDLAS, TLS or TLAS) is a technique for measuring the concentration of certain species such as methane, water vapor and many more, in a gaseous mixture using tunable diode lasers and laser absorption spectrometry. An advantage of TDLS over other techniques for concentration measurement is its ability to achieve very low detection limits (of the order of ppb). In a TDLS system, a tunable laser diode is used as light source. It is possible to modify the wavelength emitted by the laser in a range of several nm. Usually, the wavelength can be tuned in a range encompassing one or few gas absorption lines. Typically, lasers emitting in the near Infrared, usually at wavelengths shorter than approximately 2 $\mu$m are used. In some cases, more expensive mid-Infrared lasers can be used. However, a limitation of TDLS is the wavelength tunability range of one laser which is limited. Therefore, a TDLS system may be capable of measuring one single gas. In some cases, if the absorption lines are within the tunability range, it may be possible to measure two gases using one laser. TDLS systems are usually more expensive than NDIR but achieve better performance.

Regarding the background of optical gas sensing an overview is for example provided by Hodgkinson et al. "Optical gas sensing: a review.", Measurement Science and Technology 24, 2013.

Further, DE 10 2010 050 626 B4 discloses a gas analyzer comprising a Herriott cell as well as a method for operating the same. DE 10 2009 025 147 B3 discloses a method for operating a spectrometer for gas analysis and spectrometer.

CN115372300A discloses a further light path system based on gas absorption cell.

CN112748084A discloses a remote sensing detection method for motor vehicle exhaust based on infrared combined laser

SUMMARY OF THE INVENTION

It is an object of aspects of the present invention to provide a further improved device, system and method for optical gas analysis. In particular, it would be desirable to provide a compact device for optical gas analysis, in particular wherein a plurality of gases can be measured with one device for optical gas analysis. It would further be desirable to further improve a measurement accuracy and/or sensitivity.

The claimed subject matter is defined in the appended independent claims. Further refinements are provided in the dependent claims.

In a first aspect of the present invention, a device for optical gas analysis is presented, the device comprising: a gas cell for a measurement gas; a first light source, wherein the first light source is a coherent light source and wherein the first light source is adapted to emit first light into the gas cell; a second light source, wherein the second light source is an incoherent light source and wherein the second light source is adapted to emit second light into the gas cell; a first light sensor, wherein the first light sensor is adapted (and arranged) to receive the first light after passing on a first optical path through the measurement gas in the gas cell; and a second light sensor, wherein the second light sensor is adapted (and arranged) to receive the second light after passing on a second optical path through the (same) measurement gas in the same gas cell. The gas cell is adapted to provide a Herriott cell for the first light path from the first light source to the first light sensor and the gas cell is further adapted to provide a Pfund cell for the second light path from the second light source to the second light sensor.

In a further aspect of the present invention, a system for optical gas analysis is presented, the system comprising: a device as mentioned above; and an analyzer, wherein the analyzer is adapted to determine at least one gas concentration of at least one component of the measurement gas based on the light detected by the first light sensor and the light detected by the second light sensor.

In a further aspect of the present invention, a method for optical gas analysis is presented, the method comprising the steps of: providing a gas cell with a measurement gas; emitting first light from a coherent first light source into the gas cell; emitting second light from an incoherent second light source into the same gas cell; detecting the first light after passing on a first optical path through the measurement gas in the gas cell with a first light sensor; and detecting the second light after passing on a second optical path through the (same) measurement gas in the same gas cell with a second light sensor. The gas cell is adapted to provide a Herriott cell for the first light path from the first light source to the first light sensor and the gas cell is further adapted to provide a Pfund cell for the second light path from the second light source to the second light sensor.

Preferred embodiments of the invention are defined in the dependent claims. It shall be understood that the claimed system and method can have similar and/or identical preferred embodiments as the claimed device for optical gas analysis, in particular as defined in the dependent claims and as disclosed herein.

Aspects of the herein presented solutions provide a possibility to further improve optical gas analysis, in particular to obtain a compact device capable of measuring several gases with medium to high performance. As used herein, performance may refer to the capability of detecting low gas concentrations and/or measuring a gas concentration with high accuracy. For example, some gases may be measured using a NDIR measurement principle and some gases may be measured using a TDLS measurement principle. An aspect of the present invention is based on the idea of providing a device wherein a joint gas cell for a measurement gas is provided. The gas cell may be filled with a gas to be analyzed. However, it is also possible to provide a gas cell with an inlet and outlet, wherein a stream of gas flows from the inlet to the outlet such that the stream of gas may be analyzed continuously.

The device according to an aspect of the present disclosure is provided both with a first light source being a coherent light source adapted to emit first coherent light into the gas cell and a second light source being an incoherent light source adapted to emit second incoherent light into the same gas cell. For example, the incoherent light source can be (i) an infrared light source, in particular a planar infrared emitter, a MEMS infrared emitter, or emitter adapted to emit infrared light by thermal emission; or can be (ii) a UV light source, in particular a UV LED or other UV emitter. The coherent light source can be a laser, in particular a vertical cavity surface emitting laser, VCSEL, a distributed feedback laser, DFB, a quantum cascade laser, QCL, or an interband cascade laser, ICL. The first light source can comprise a collimator adapted to collimate the first light and to emit the collimated first light into the gas cell. In addition or in the alternative, the second light source can comprise a reflector adapted to collect the second light and to adapt an angular emission of the second light into the gas cell. However, the second light source may be adapted to emit at least a first portion of the second light with a divergence angle such that at least some of the second light performs multiple passes through the measurement gas before reaching the second light sensor. Thereby the absorption length can be increased and the measurement sensitivity can be further improved also for the second incoherent light. Optionally, at least a second portion of the second light may be provided on a single-pass through the measurement gas to the second light sensor. By combining both a single-pass and multiple-pass optical path from the second light source to the second light sensor, the sensitivity may be improved while still providing a reliable setup which may allow larger alignment tolerances for the second light source. A further advantage of combining both a single-pass and multiple-pass optical path from the second light source to the second light sensor can be that the dynamic range of the device may be improved, for example one pass for high concentration and three passes for low concentration.

The device further comprises a first light sensor and a second light sensor. The first light sensor is adapted and arranged to receive the first light after passing on a first optical path through the measurement gas in the gas cell. The second light sensor is adapted and arranged to receive the second light after passing on a second optical path through the same measurement gas in the same gas cell. As indicated above, the second optical path can be a combined optical path wherein a first portion is provided on a single pass through the measurement gas and a second portion is provided on a multiple-pass optical path through the measurement gas. A light sensor as used herein may comprise one or more detectors. For example, a light sensor can comprise several detector pixels. Different detectors of a light sensor can optionally be provided with at least some different wavelength-selective filters. For example, the second sensor can be a quad pyroelectric detector or a quad-thermopile detector, e.g. four separate detectors each with a specific bandpass filter and all four integrated into a TO-package. Other sensor types are possible. The number of detectors (or "channels") of a sensor may determine the number of gases which can be measured, It is also possible that at least one channel is used as reference and the other one or more channels as a measurement channel. Commercially available sensors include single detector sensors, dual detector sensors (two channels), quad detector sensors (four channels) or even 8-channel detector sensors. It will be appreciated that the present disclosure is not limited to a specific number of detectors per sensor.

An advantage of aspects of the proposed solution can be that several and/or different gases may be measured with one single system. An additional advantage of aspects of the proposed solution can be a lower cost per gas or gas constituent compared to two separate systems.

Advantageously, no moving parts may be needed. An advantage of this implementation may be an increased reliability. For example, depending on a desired measurement scheme, incoherent light modulation, laser modulation and laser wavelength tuning may be performed without moving parts, e.g., purely electrically. For example, the second light source for incoherent light may be modulated at frequencies below 1 kHz, in particular in a range between 1 and 100 Hz, in particular between 1 and 30 Hz. For example, the first light source for coherent or laser light may be modulated at frequencies above 1 kHz, in particular at at least 20kHz or more. A DC offset may be used for both types of light. Optionally, light may be detected in a phase-sensitive manner for the first and/or second light, in particular using the lock-in principle.

In the following, some terms which are used throughout the application, shall be shortly explained and defined. The term "gas cell" can refer to a measurement volume for a measurement gas. A gas cell can have different shapes. For example, a cylindrical gas cell may be provided with an inlet and an outlet for the measurement gas to be analyzed. The term "measurement gas" can refer to a measurement gas comprising a one or more gases to be analyzed, in particular to a mixture wherein the system for optical gas analysis may be used for determining the constituents and/or concentrations.

In an embodiment, the device for optical gas analysis can be adapted to perform a tunable diode laser spectroscopy, TDLS, measurement using the first light source and the first light sensor; and to perform a non-dispersive infrared, NDIR, or non-dispersive ultraviolet, NDUV, measurement using the second light source and the second light sensor; and wherein both (i) the TDLS measurement and (ii) the NDIR or NDUV measurement are performed in the same gas cell on the same measurement gas. Both types of measurement can be realized using a single gas cell and sharing at least some optical components. In a refinement, the device can be adapted to measure a first constituent of the measurement gas with high accuracy using TDLS and measure a second constituent of the measurement gas with lower accuracy using NDIR or NDUV. The first light source can thus be specifically adapted to an absorption line of the first constituent to be measured with high accuracy. For example, NDIR or NDUV may be used to determine the presence or absence of an impurity or pollution of the measurement gas and TDLS may be used for high accuracy measurement of a desired target component. Hence, rather than providing an additional TDLS measurement at a different wavelength, which may potentially involve higher costs for a further tunable laser, the NDIR or NDUV may nicely complement the TDLS measurement.

The gas cell can be a multipass cell comprising a first reflective surface and a second reflective surface, wherein the first and second reflective surface face each other. In particular, the multipass gas cell can comprise a first spherical mirror providing the first reflective surface and a second spherical mirror providing the second reflective surface, wherein the first and second spherical mirror face each other. Advantageously, one or more opto-mechanical components may be shared between both measurement methods for measurement of the first and second light source. In particular, spherical mirrors with openings can be shared between the two methods. The gas cell can be adapted to provide a multipass gas cell for the first optical light from the first light source to the first light sensor. In addition thereto, the gas cell can further be adapted to also provide a multipass gas cell for at least a portion of the second optical light from the second light source to the second light sensor. As used herein, a multipass gas cell is adapted to increase a path length of the light from the light source to the light sensor such that the path length through the measurement gas in the gas cell is increased. In other words, in a refinement it is suggested to provide a specific arrangement wherein the gas cell is adapted to provide a multipass gas cell for both the coherent first light and (at least a portion of) the incoherent second light. The device can be adapted such that at least another portion of the incoherent second light may reach the second light sensor on a direct optical path, i.e. without multipass. As indicated above, an advantage of combining both a single-pass and multiple-pass optical path from the second light source to the second light sensor can be that the dynamic range of the device may be improved, for example one pass for high concentration and three passes for low concentration.

In a further refinement, the multipass gas cell may be adapted to provide at least a first portion of the incoherent second light on the second optical path from the second light source to the second light sensor, wherein the second optical path is a multipass beam path; and at least a second portion of the incoherent second light on a third optical path from the second light source to the second light sensor, wherein the third optical path is a direct (or single-pass) optical path from the second light source to the second light sensor.

In a refinement, the first reflective surface and the second reflective surface can be shared by the first and second optical paths. Accordingly, the first and second reflective surfaces can be adapted to provide a first multipass optical path from the first light source to the first light sensor and a second multipass optical path for (at least a portion of the light) from the second light source to the second light sensor. Hence, multipass optical paths for both the coherent first light and the incoherent second light can be provided. Thereby the sensitivity for both the measurements with the coherent and the incoherent light can be further improved while at the same time providing a compact device for optical gas analysis.

In a refinement, the first optical path can comprise multiple reflections at the first reflective surface and multiple reflections at the second reflective surface. The second optical path (for at least a portion of the second light) can comprise exactly one or at least one reflection at the first reflective surface and exactly one or at least one reflection at the second reflective surface. At least another portion of the second light may be provided directly to the second light sensor without reflections at the first and/or second reflective surface. In particular, the first optical path may comprise more reflections at the first reflective surface than the second optical path. Similarly, the first optical path may comprise more reflections at the second reflective surface than the second optical path. The inventors recognized that the selection of different numbers of reflections for the first and second light can facilitate implementation. In other words, a larger number of reflections is implemented for the first coherent light compared to the incoherent second light, which may be originating from a more divergent light source such as a thermal emitter.

The first reflective surface can comprise a first aperture adapted to pass first light from the first light source and a second aperture adapted to pass second light from the second light source. The second aperture can be arranged at a center of the first reflective surface. The first aperture can be arranged decentered with respect to the first reflective surface. Similarly, the second reflective surface can comprise a third aperture adapted to pass first light from the first light source and a fourth aperture adapted to pass second light from the second light source. The fourth aperture can be arranged at a center of the second reflective surface. The third aperture can be arranged decentered with respect to the second reflective surface. An aperture can refer to a portion of the first and or second reflective surface for receiving light from a light source or for coupling light out to a light sensor. In particular, an aperture can be an opening for light in the respective reflective surface. The first aperture and the second aperture may optionally be connected, for example such that the first aperture and the second aperture are connected for form a pear-shaped aperture. For example, a larger second aperture and a smaller first aperture may be merged, and for example the cusps between circles of a first and second circular aperture may be removed. In addition or in the alternative, the same can apply to the third and fourth aperture which may also be connected. The aperture may comprise a filter also referred to as a window. The aperture may allow light to pass but may still provide a barrier to the measurement gas. The window may not only be arranged in direct contact with respective reflective surface but may also be arranged in front of or behind the respective aperture, for example in a wall of the gas cell.

In a refinement, the first and/or third aperture can comprise a window transparent for the first light and reflective for the second light. Similarly, the second and/or fourth aperture can comprise window transparent for the second light and reflective for the first light. An advantage of this embodiment is that apertures may still serve as reflectors for a portion of the light, thereby allowing further reflections within the multipass gas cell. Moreover, unwanted interference on the light sensors may be reduced. For example, the window could be used for removing a range of wavelengths. A typical case would be to use e.g. sapphire to absorb wavelengths > 5.5 $\mu$m if some gas present absorb a longer wavelengths but an interference filter of a detector of the light sensor would not be able to filter out those longer wavelengths. As indicated above, the window of an aperture may not only be arranged in direct contact with respective reflective surface but may also be arranged in front of or behind the respective aperture, for example in a wall of the gas cell. For example, a windows can be glued to the gas cell, usually metallic or plastic, and not to the mirrors. This may facilitate manufacturing.

Regarding the arrangement of the first and second light sources and the first and second light sensors, generally speaking, the light sources can be arranged at the same side of the gas cell or on different sides of the gas cell. Similarly, the first and second light sensors can be arranged at the same side of the gas cell or on different sides of the gas cell. One or more of the light sensors can be arranged at the same side of the gas cell as one or more light sources or on a different side of the gas cell as one or more light sources. In a refinement, the first light source can be arranged at a first side of the gas cell and the second light source can be arranged at a second side of the gas cell. The first and second light sources can thus be arranged at opposite sides of the gas cell. In addition or in the alternative, the second light sensor can be arranged at the first side of the gas cell and the first light sensor can be arranged at the second side of the gas cell. The first and second light sensor can thus be arranged at opposite sides of the gas cell. An advantage of providing the respective light sources and/or light sensors on different sides is that crosstalk may be reduced. Moreover, an advantage of an arrangement at least partially on opposite sides can be a more compact design. For example, crosstalk can be reduced by not having a TDLS light sensor facing an NDIR source, otherwise a part of broadband incoherent light may be detected by the TDLS light sensor. The TDLS light sensor as the first light sensor can, for example, be a photodiode adapted (and arranged) to detect the light emitted by the first coherent light source, Further, space limitations may be relaxed. Sources are often bulkier than light sensors, so combining one source and one light sensor on each side can make the assembly more compact. The sources (and light sensors) for one measurement principle do not necessarily have to be on the same side but can advantageously be provided on opposite sides of the gas cell.

The first optical path and the second optical path can be adapted to cross each other in the gas cell. In other words, the first optical path from the first coherent light source to the first light sensor and the second optical path from the second incoherent light source to the second light sensor can cross each other or have at least one intersection. The first and second optical path may thus be adapted at least partially cover a same or identical measurement volume of the gas cell. An advantage can be that both measurements with the coherent light source and the incoherent light source thereby provide a more meaningful and/or more accurate measurement result of the measurement gas in the gas cell.

The first optical path can be at least 3 times longer, in particular at least 5 times longer, in particular at least 8 times longer than the second optical path. The first optical path may be at least 5 times, in particular at least 10 times, in particular at least 15 times longer than a length of the gas cell. The second optical path may be at least 2 times longer, in particular at least 3 times longer than the length of the gas cell. For example, the first optical path may be a first multipass optical path with 17 passes, for example for TDLS, and the second optical path may be a second multipass optical path with 3 passes, for example for NDIR. Again, a portion of the second light may reach the second light sensor on a direct path and another portion of the second light may reach the second light sensor on a multipass optical path. As used herein the length of the gas cell may refer to a separation or distance between the first reflective surface and second reflective surface of the gas cell facing each other.

The gas cell is adapted to provide a Herriott (Herriott-type) cell for the first light path from the first light source to the first light sensor. The gas cell is further adapted to provide a Pfund (Pfund-type) cell for the second light path from the second light source to the second light sensor. In other words, it is suggested to provide a combined Pfund and Herriott multipass cell design. The inventors recognized that in particular for optical gas analysis with a coherent first light source and a divergent incoherent second light source both types may advantageously be combined. In particular, for the Pfund-type behavior, the gas cell can be a multipass cell comprising a first reflective surface and a second reflective surface facing each other, in particular two spherical mirrors, which may even be identical. The reflective surfaces may each have a central aperture. For the Pfund-type behavior for the second light, the gas cell can be configured such that a light ray from the second light source may enter at an aperture at the center of the first or second reflective surface (e.g. the second aperture as indicated above), at least a part of the second light being redirected twice at two reflections points, and then exit the cell trough an aperture at a center of the respective other of the first and second reflective surface on a third pass (e.g. the fourth aperture as indicated above). Further light rays from the second light source, which can be a divergent light source, can exhibit a corresponding behavior with such multiple passes through the gas cell. Further, some light rays from the second light source may directly reach the second light sensor on a third optical path without undergoing multipasses through the gas cell. The second light source may be adapted to emit a (divergent) cone of light. Rays within a narrow central angular range may not be reflected and may undergo only one pass through the measurement gas, as an example for the third optical path. Rays emitted at larger angles may be reflected and undergo three passes, as an example for the second optical path. At even larger angles, rays may be scattered, absorbed or otherwise lost. Similar to the Pfund-type cell, a Herriott-type cell can be a multipass cell comprising a first reflective surface and a second reflective surface facing each other, in particular two spherical mirrors, which may even be identical. For the Herriott-type behavior, at least one aperture may be provided in one of the reflective surfaces to allow the input and output beams to enter and exit the cavity. Alternatively, the beam may exit through an aperture in the opposite reflective surface.

In a refinement the Pfund cell can comprise a first reflective surface and a second reflective surface facing each other, wherein the Pfund cell can be configured such that a focal point of at least one of the reflective surfaces forming the Pfund cell is behind the surface of the opposite reflective surface forming the Pfund cell, in particular wherein the focal point is located outside the gas cell. At first glance it may seem counterintuitive to locate the focal point outside the gas cell, since this may require a larger aperture for coupling light into the Pfund cell. However, an advantage of this refinement can be that an incoherent light source arranged behind a reflective surface of the gas cell and which may be adapted to emit divergent second light, may couple light into the gas cell more efficiently. A further advantage can be that this arrangement provides a degree of freedom in the design. For example, the placement of the second light source is more flexible. It also becomes possible to place an output window of the gas cell behind the reflective surface in a side wall of the gas cell. This may facilitate sealing of the gas cell and/or reduce manufacturing costs.

The second light source can comprise an optical filter adapted to reduce one or more predetermined spectral components in the second light. The optical filter can comprise a gas adapted to absorb the predetermined spectral components. An advantage can be that a spectrum of the second light can be adapted to a desired application.

In a further refinement of the system, the analyzer can be adapted to determine the at least one gas concentration of at least one component of the measurement gas by correcting a gas concentration determined based on the light detected by the first light sensor or the second light sensor based on the light detected by the respective other light sensor. An advantage of this aspect can be a further improved sensitivity.

BRIEF DESCRIPTION OF THE DRAWINGS

These and other aspects of the invention will be apparent from and elucidated with reference to the embodiment(s) described hereinafter. In the following drawings

Fig. 1    shows a schematic diagram of a first embodiment of a device for optical gas analysis according to an aspect of the present invention;

Fig. 2    shows a schematic diagram of a second embodiment of a device for optical gas analysis according to an aspect of the present invention;

Fig. 3    shows a frontal view of a mirror of a gas cell of a device for optical gas analysis;

Fig. 4    shows a perspective view of the mirror of Fig. 3;

Fig. 5    shows a further embodiment of a mirror of a gas cell of a device for optical gas analysis;

Fig. 6    shows a perspective view illustrating a first optical path and a second optical path in a gas cell of a device for optical gas analysis according to an aspect of the present invention;

Fig. 7    shows a side view illustrating the first optical path and the second optical path in the gas cell of the device for optical gas analysis of Fig. 6;

Fig. 8    shows a perspective view with an isolated illustration of the first optical path in the gas cell of the device for optical gas analysis of Fig. 6;

Fig. 9    shows a side view illustrating the first optical path of Fig. 8;

Fig. 10   shows a perspective view with an isolated illustration of the second optical path in the gas cell of the device for optical gas analysis of Fig. 6;

Fig. 11   shows a side view illustrating the second optical path of Fig. 10;

Fig. 12   shows a flow chart of a method according to an aspect of the present invention.

DETAILED DESCRIPTION OF THE INVENTION

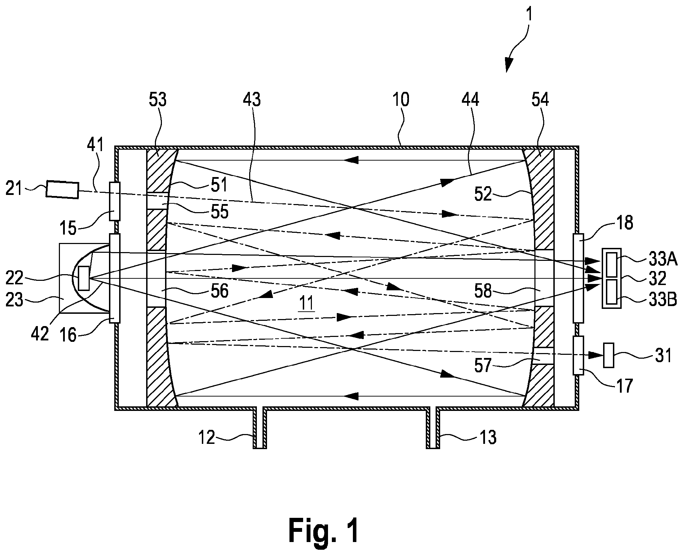

Fig. 1 schematically shows a first embodiment of a device for optical gas analysis. The device is designated therein in its entirety by reference numeral 1. The device 1 comprises a gas cell 10 for a measurement gas 11. The gas cell may comprise one or more gas connectors to allow gas exchange in the gas cell. In the example shown, an inlet 12 and an outlet 13 are provided for the measurement gas. The measurement gas 11 can thus be introduced into the gas cell 10 via the inlet 12 and leave the gas cell via the outlet 13. The gas cell 10 may be filled with a measurement gas to be analyzed. However, it is also possible to provide a gas flow that flows from the inlet 12 to the outlet 13 so that the gas flow can be analyzed continuously. The inlet 12 and the outlet 13 may also be arranged at different positions, for example on opposite side surfaces of the gas cell 10 such that the measurement gas 11 passes through the gas cell 10.

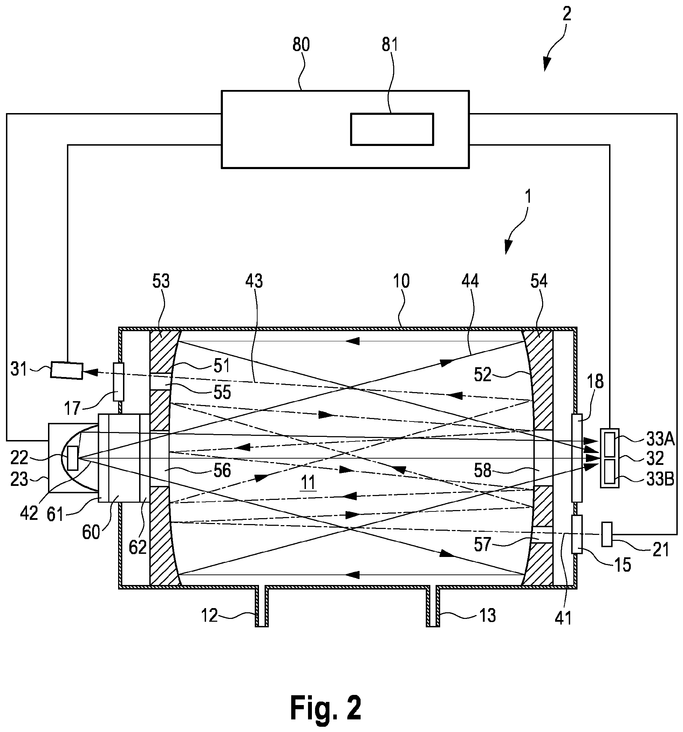

The device 1 for optical gas analysis further comprises a first light source 21, a second light source 22, a first light sensor 31 and a second light sensor 32. The first light source 21 is a coherent light source and is adapted to emit first light 41 into the gas cell 10. For illustration, the first light is illustrated by a dotted line in Fig. 1 and Fig. 2. The second light source 22 is an incoherent light source and is adapted to emit second light 42 into the gas cell. For illustration, the second light is illustrated by a solid line in Fig. 1 and Fig. 2. The first light sensor 31 is adapted and arranged to receive the first light 41 after passing on a first optical path 43 through the gas cell 10. The second light sensor 32 is adapted and arranged to receive the second light 42 after passing on a second optical path 44 through the same measurement gas 11 in the same gas cell 10.

The device 10 for optical gas analysis may be adapted to perform a tunable diode laser spectroscopy, TDLS, measurement using the first light source 21 and the first light sensor 31; and to perform a non-dispersive infrared, NDIR, or non-dispersive ultraviolet, NDUV, measurement using the second light source 22 and the second light sensor 32. Both (i) the TDLS measurement and (ii) the NDIR or NDUV measurement are performed using the same gas cell 10 on the same measurement gas 11.

The first light source 21 can, for example, be a tunable single mode laser, e.g., a NIR VCSEL or DFB Laser or a mid-IR QCL or ICL laser. The first light 41 can be a light beam which is inserted into the gas cell 10 through a small opening or window. After optionally several reflections and thus several passes through the measurement gas 11 in the gas cell 10, the first light exits the gas cell 10.

The second light source 22, being an incoherent light source adapted to emit second incoherent light into the same gas cell, can for example be (i) an infrared light source, in particular a planar infrared emitter, a MEMS infrared emitter, or emitter adapted to emit infrared light by thermal emission; or can be (ii) a UV light source, in particular a UV LED or other UV emitter.

The second light source 22 for the incoherent radiation may optionally comprise a reflector 23 to reduce the divergence of the emitted second light 42. Several shapes of reflectors are possible, such as spherical, parabolic, Winston-cone, elliptic, or freeform. The reflector shape, its distance to a reflective surface or mirror in the gas cell, the reflector diameter and the opening of a window or aperture in a reflective surface can be optimized to improve system performance. Reflector optimization can be combined with the mirror optimization, in particular such that the reflector matches the mirror, in particular such that the collimated light fully illuminates the mirror and losses are minimized.

While the light sources 21, 22 and light sensors 31, 32 can be integrated into the gas cell, at least some of them are preferably arranged outside of the gas cell for protection and to facilitate sealing the gas cell 10. The gas cell 10 should be leak tight. Gas connectors, in the given example inlet 12 and outlet 13, allow to exchange gas in the cell. For the first and second light, the gas cell may comprise one or more windows through which the first light 41 and second light 42 can enter and exit the gas cell 10.

In the example shown in Fig. 1, a first window 15 is provided for allowing the coherent first light 41 from the coherent first light source 21 to enter the gas cell 10. The first window 15 may also be referred to as a laser entry window. A second window 16 is provided for allowing the incoherent second light 42 from the incoherent second light source 22 to enter the gas cell 10. The second window may also be referred to as IR or UV entry window. A third window 17 is provided for allowing the coherent first light 41 to exit the gas cell 10 towards the first light sensor 31. The third window 17 may also be referred to as laser exit window. A fourth window 18 is provided for allowing the incoherent second light 42 to exit the gas cell 10 towards the second light sensor 32. The fourth window may also be referred to as IR or UV exit window. It will be appreciated that the use of separate windows is optional and that, depending on a beam path within the gas cell, a common entry and exit window may be used. Similarly, the use of separate windows for the first and second light can be optional. The entrance and exit windows may be arranged on the same or at different sides of the gas cell 10. Similarly, the light sources and lights sensors may be arranged on the same or at different sides of the gas cell.

The respective windows 15, 16, 17, 18 of the gas cell 10 are adapted to a wavelength range of interest. The gas cell 10 may comprise a first window 15 and/or a third window 17 adapted for performing a TDLS measurement. The gas cell 10 may comprise a second window 16 and/or a fourth window 18 adapted for performing an NDIR or NDUV measurement. For example, for performing NDIR, typical examples are sapphire (transparent up to approximately 5 $\mu$m), calcium fluoride (transparent up to approximately 9 $\mu$m), barium fluoride (transparent up to approximately 12 $\mu$m), Zinc Sulphide (transparent up to approximately 12.5 $\mu$m), Silicon (transparent up to approximately 15 $\mu$m), Zinc Selenide (transparent up to approximately 18 $\mu$m), Germanium (transparent up to approximately 18 $\mu$m). Other materials including but not limited to KRS-5, AMTIR, and related materials may also be possible.

An anti-reflection coating may be provided on one or more of the windows 15, 16, 17, 18 of the gas cell 10. For example, for performing TDLS, the first window 15 and/or the third window 17 may be antireflection coated windows optimized for the typical NIR wavelengths used. The windows for TDLS are typically not compatible with NDIR and vice-versa and separate windows of at least two different materials and/or windows having different coatings may be used.

It is also possible that an optical filter of the first and/or second light sensor 31, 32 may serve as a window of the gas cell 10. For example, the first and/or second light sensor 31, 32 may be coupled to the gas cell 10 in a leak tight manner. Similarly, the first and/or second light source 21, 22 may be coupled to the gas cell 10 in a leak tight manner.

In the schematic example shown in Fig. 1, the second light sensor 32 may comprise one or more detector, for example two detectors 33A and 33B. The detectors 33A, 33B may be sensitive to different wavelengths of interest in an emission spectrum of the second light source 22 for analysis of the measurement gas in the gas cell 10. Exemplary detectors 33A, 33B for second light in the infrared wavelength range can be thermal detectors like bolometers, thermopiles, or pyroelectric detectors but semiconductor-based detectors or other detectors might be used too. Each IR detector may be equipped with a separate IR filter selected to identify a gas of interest. The second light sensor 32 may for example include dual, quad or even eight detectors tightly integrated into one single package. For the first light sensor 31, it may be sufficient to provide for example a single photodiode as a detector. Optionally a filter may be provided that can be adapted to a tuning range of a desired TDLS measurement.

Referring again to Fig. 1, the gas cell 10 can be a multipass cell comprising a first reflective surface 51 and a second reflective surface 52. The first and second reflective surface 51, 52 face each other. In the example shown in Fig. 1, the multipass gas cell comprises a first spherical mirror 53 providing the first reflective surface 51 and a second spherical mirror 54 providing the second reflective surface 52. The first and second spherical mirror 53, 54 face each other. In Fig. 1, the first and second reflective surface 51, 52 are illustrated by separate elements, however, the mirrors or first and second reflective surface may also be provided by sidewalls of the gas cell 10.

As shown in Fig. 1, the first reflective surface 51 and the second reflective surface 52 are shared by the first optical path 43 of the first light 41 and the second optical path 44 by the second light 42. The first optical path 43 comprises multiple reflections at the first reflective surface 51 and multiple reflections at the second reflective surface 52. The second optical path 44 comprises at least one, in particular exactly one, reflection at the first reflective 51 surface and at least one, in particular exactly one reflection, at the second reflective surface 52.

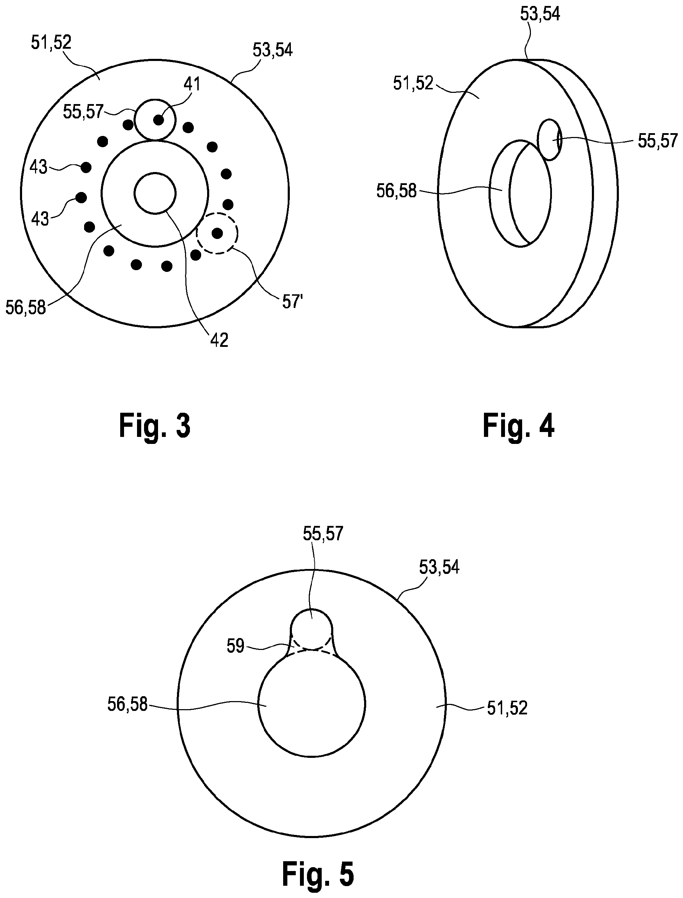

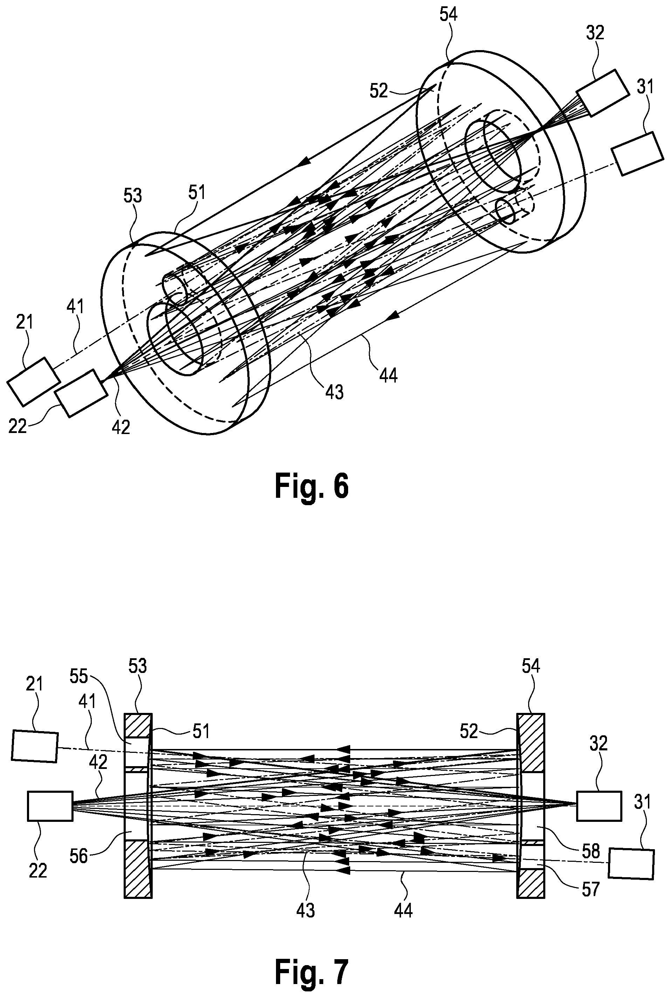

In the shown example, the gas cell 10 is adapted to provide a Herriott-type cell for the first light path 43 from the first light source 21 to the first light sensor 31. The gas cell 10 is further adapted to provide a Pfund-type cell for the second light path 44 from the second light source 22 to the second light sensor 32. The Pfund cell comprises a first reflective surface 51 and a second reflective surface 52 facing each other. In a refinement the Pfund cell is configured such that a focal point of at least one of the reflective surfaces 51, 52 forming the Pfund cell is behind the surface of the opposite reflective surface 51, 52 forming the Pfund cell, in particular, wherein the focal point is located outside the gas cell 10. Exemplary configurations of reflective surfaces or mirrors are shown in Fig. 3 to Fig. 5. Exemplary lights paths are illustrated in Fig. 6 to Fig. 11. Hence, it is suggested to provide a device for optical gas analysis comprising an advantageous Pfund-Herriott combination.

Fig. 3 and Fig. 4 show a first exemplary embodiment of a mirror 53 for a Pfund-Herriott combination comprising a reflective surface 51. Advantageously, the first mirror 53 and the second mirror 54 can be identical. This can simplify manufacturing due to reduced inventory and reduce costs. In the shown embodiment, the mirror 53, 54 is a spherical mirror. The first reflective surface 51 comprises a first aperture 55 adapted to pass first light 41 from the first light source 21 and a second aperture 56 adapted to pass second light 42 from the second light source 22. The second aperture 56 is arranged at a center of the first reflective surface 51. The first aperture 55 is arranged decentered with respect to the first reflective surface 51. Correspondingly, the second reflective surface 52 comprises a third aperture 57 adapted to pass first light 41 from the first light source 21 and a fourth aperture 58 adapted to pass second light 42 from the second light source 22. The fourth aperture 58 is arranged at a center of the second reflective surface 52. The third aperture 57 is arranged decentered with respect to the second reflective surface 52. The respective apertures are also illustrated in Fig. 1 and Fig. 6 to Fig. 11.

In other words, for the example of NDIR, on the axis an opening or aperture 56 is used to let the mid infrared light pass through. It has been found that working in the infrared, for example up to 12 $\mu$m wavelength, may impose constraints on using partially reflective materials or using only a partial coating, which may either not be possible or too expensive. Hence, an aperture 56 provides a feasible implementation for allowing the second light to enter and exit the gas cell. An additional opening or aperture 55 is placed off-axis to allow the laser light as exemplary first light to enter the cell. Similarly, an additional opening or aperture 57 is placed off-axis to allow the laser light as exemplary first light to exit the cell. The aperture 55, 57 should be small to still allow reflections in the Herriott cell design. Similarly, the aperture 56, 58 should be small enough to allow efficient passes of the Pfund cell design. If 55, 57 are too large, the maximum number of passes is reduced. If 56, 58 are too large, the Herriott cell cannot be realized and the Pfund cell does not reflect enough light. An optical design of reflector and mirror should match or be optimized, as indicated above. In Fig. 3, the dots on the reflective surface 53 symbolize possible reflection points of first light on the first optical path 43 during several passes across a Herriott cell.

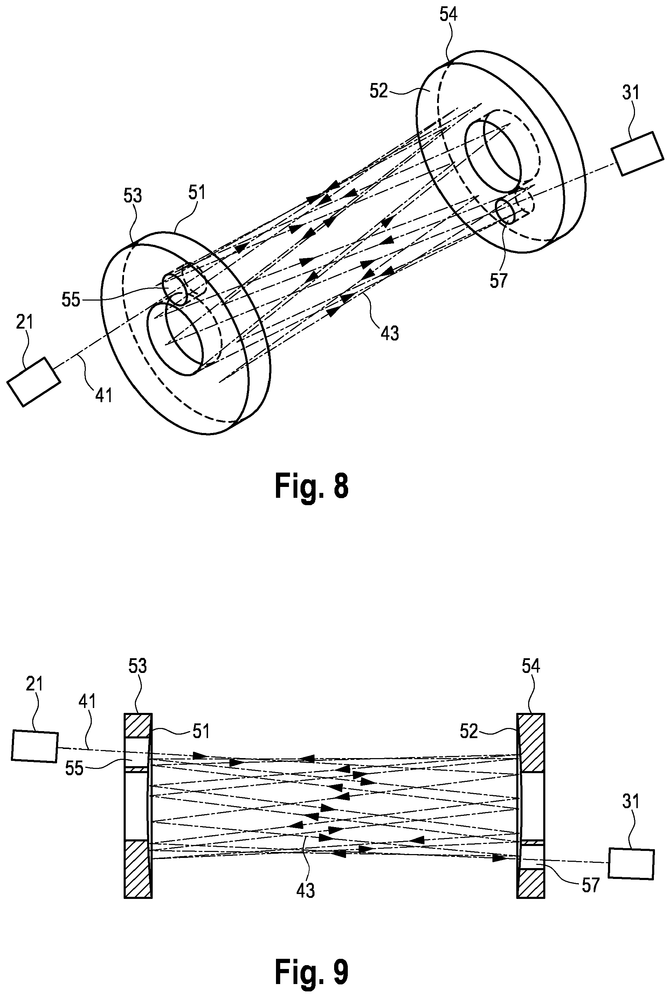

Using this approach, a mirror carrier material of the first and/or second mirror 53, 54 can be a common mirror substrate material, therefore, usual manufacturing methods can be used, and manufacturing costs are moderate. The mirror can then be coated uniformly with a metal coating, typically gold, to cover a wide range of wavelengths as necessary. In principle other coatings might be used. In the cell assembly two nominally identical mirrors 53, 54 can be used, the central openings 56, 58 are aligned to the central axis of the cell, and the focal point of each mirror can placed at least on the back of the facing mirror or reflective surface. This is exemplarily illustrated in the side view in Fig. 7, with the focal points being placed e.g. at an output of the second light source 22 and in proximity to the second light sensor 32. The small openings 55, 57 for the laser as the first light are not necessarily aligned along a central axis of the gas cell or may not necessarily face each other, as the relative radial position of the openings 55, 57 determines the number of passes in a Herriott cell. An angle $\theta$, measured as angle from the cell axis to the laser entry opening 55 and laser exit opening 57 (see 57' in Fig. 3, as well as different angular position of openings 55 and 57 in Fig. 8) is defined by rotating one mirror 53, 54 about the cell axis so that the desired angle and thus number of reflections is achieved.

Fig. 5 shows a further embodiment of a mirror 53, 54 of a gas cell 10 of a device 1 for optical gas analysis. The first aperture 55 and the second aperture 56 may optionally be connected, for example such that the first aperture and the second aperture are connected to form a pear-shaped aperture 59. For example, a larger second aperture 56 and a smaller first aperture 55 may be merged, and for example the cusps between circles of a first and second circular aperture may be removed. In addition or in the alternative, the same can apply to the third and fourth aperture 57, 58 which may also be connected. In other words, it is thus possible to realize combined opening in the mirror e.g. with a pear shape, without the need of preserving material between the two openings.

Referring again to Fig. 1 in view of Fig. 3 to Fig. 5, the first aperture 55 may be aligned with the first window 15. The second aperture 56 may be aligned with the second window 16. The third aperture 57 may be aligned with the third window 17. The fourth aperture 58 may be aligned with the fourth window 18.

Fig. 6 to Fig. 11 illustrate the configuration and optical paths in a combined Pfund-Herriott cell as described herein in more detail. Elements corresponding to the ones as previously described are denoted by the same reference numerals.

Fig. 6 and Fig. 7 illustrate a perspective view and a side view of the first optical path 43 and second optical path 44 in the gas cell. The side walls of the gas cell are not shown in the drawings for simplicity.

Fig. 8 and Fig. 9 illustrate an isolated perspective view and a side view of the first optical path 43 in the gas cell (i.e. without the second optical path 44 for better understanding). For the first light 41 by the first light source 21, the reflective surface 51 of the first mirror 53 and the reflective surface 52 of the second mirror 54 provide a Herriott-type reflection in the gas cell. In other words, a collimated (single) laser beam as the first light 41 enters the cavity via the aperture 55, is reflected multiple times between the first and second reflective surfaces 51, 52 at different angular positions, and leaves the cavity via the aperture 56 towards the first light sensor 31.

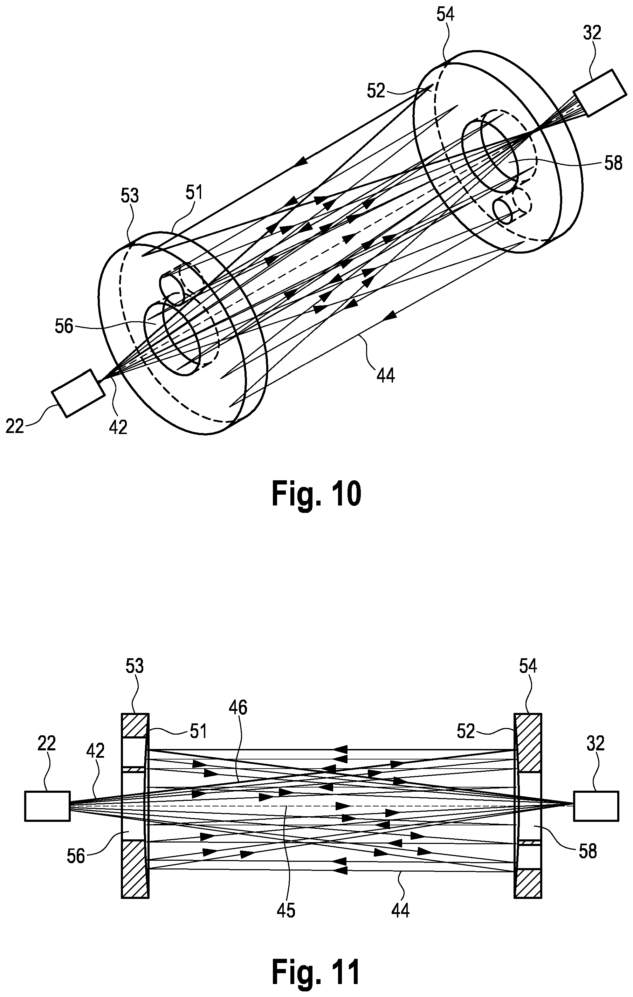

Fig. 10 and Fig. 11 illustrate an isolated perspective view and a side view of the second optical path 44 in the gas cell (i.e. without the first optical path 43 for better understanding). For the second light 42 by the second light source 22, the reflective surface 51 of the first mirror 53 and the reflective surface 52 of the second mirror 54 provide a Pfund-type reflection in the gas cell. In other words, a divergent cone of light is provided as the second light 42 by the second light source 21 and enters the cavity via aperture 56. A portion of the second light 21 may directly reach the second light sensor 32 without being reflected by the first or second reflective surface 51, 52. Such a direct or single-path beam path may also be referred to as a third optical path 45. Another portion of the second light 21 may undergo a first reflection at the second reflective surface 52, a second reflection at the first reflective surface 51 and leave the cavity via the aperture 58 towards the second light sensor 32. While the second light 21 may generally be a cone of light, an exemplary light ray on such a beam path is illustrated by the thick solid line 46.

Fig. 2 shows a schematic diagram of a second embodiment of a device 1 for optical gas analysis. In the following, differences with respect to the embodiment shown in Fig. 1 will be briefly described.

As shown in Fig. 2, the first light source 21 and the second light source 22 can also be arranged on different sides of the gas cell 10. Similarly, the first light sensor 31 and the second light sensor 32 can be arranged on different sides of the gas cell 10. As described above, an advantage of providing the respective light sources and/or light sensors on different sides is that crosstalk may be reduced. Moreover, an advantage of an arrangement at least partially on opposite sides can be a more compact design. For example, crosstalk can be reduced by not having a TDLS light sensor, for example the first light sensor 31, facing an NDIR source, for example the second light source 22, otherwise a part of broadband incoherent light may be detected by the TDLS light sensor. The TDLS light sensor as the first light sensor can, for example, be a photodiode adapted (and arranged) to detect the light emitted by the first coherent light source, Further, space limitations may be relaxed. Sources are often bulkier than light sensors, so combining one source and one light sensor on each side can make the assembly more compact. The sources (and light sensors) for one measurement principle do not necessarily have to be on the same side but can advantageously be provided on opposite sides of the gas cell.

Furthermore, Fig. 2 shows an optional modification of the second light source 22 and respective entrance window 16 (as shown in Fig. 1). Optionally, a filter may be used to reduce the influence of one or more unwanted absorption lines from the second light source 22. In the example shown in Fig. 2, a gas-filled cell 60 is provided in front of the second light source 22. The gas filled cell may be filled with a light-absorbing gas that is adapted to filter out the one or more unwanted absorption lines by negative filtering. Windows of the gas cell are denoted by reference numerals 61 and 62. It is also possible to already provide the second light source 22 filled with a light-absorbing gas adapted to filter the one or more unwanted absorption lines by negative filtering. Hence, unwanted absorption lines can be removed.

A device 1 for optical gas analysis as described in the present disclosure, for example as shown in Fig. 1 or Fig. 2, can be part of a system 2 for optical gas analysis. Further system elements are exemplarily illustrated in Fig. 2. The system 2 further comprises an analyzer 81, wherein the analyzer is adapted to determine at least one gas concentration of at least one component of the measurement gas 11 based on the light detected by the first light sensor 31 and the light detected by the second light sensor 32. The analyzer 81 can be provided as a separate entity or for example integrated into a controller 80 as shown in Fig. 2. The analyzer 81 is adapted to receive first information indicative of the first light after having passed through the measurement gas and second information indicative of the second light after having passed through the measurement gas. The controller 80 may be optionally be connected to the first and/or second light source 21, 22 and adapted to control the same, for example by setting an emission timing, emission frequency, wavelength or other emission characteristics. The controller may be connected to the first and/or second light sensor 31, 32 to receive information about the detected first and/or second light after having passed through the measurement gas 11.

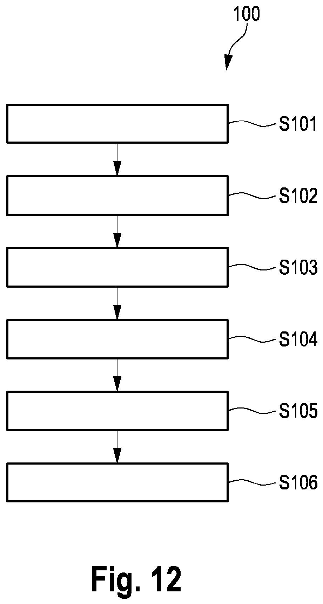

Fig. 12 shows a flow chart of a method 100 for use in optical gas analysis. In a first step S101, a gas cell with a measurement gas is provided. In a second step S102, first light from a coherent first light source is emitted into the gas cell. In step S103, second light from an incoherent second light source is emitted into the same gas cell. In step S104, the first light is detected with a first light sensor after passing on a first optical path through the measurement gas in the gas cell. In step S105, the second light is detected with a second light sensor after passing on a second optical path through the same measurement gas in the same gas cell. The sequence of steps of the method steps may be changed and at least some of the method steps may be performed in parallel. Based on the detected first and second light after having passed through the measurement gas in the gas cell, one or more constituents and/or concentrations of constituents in the measurement gas may be determined in an optional step S106 and provided as an output.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

Any reference signs in the claims should not be construed as limiting the scope.

**Claims**

1. Device (1) for optical gas analysis, the device comprising:

   - a gas cell (10) for a measurement gas (11);
   - a first light source (21), wherein the first light source is a coherent light source and wherein the first light source is adapted to emit first light (41) into the gas cell;
   - a second light source (22), wherein the second light source is an incoherent light source and wherein the second light source is adapted to emit second light (42) into the gas cell;
   - a first light sensor (31), wherein the first light sensor is adapted and arranged to receive the first light after passing on a first optical path through the measurement gas (11) in the gas cell (10); and
   - a second light sensor (32), wherein second light sensor is adapted and arranged to receive the second light after passing on a second optical path through the same measurement gas (11) in the same gas cell (10);
   **characterized in that** the gas cell (10) is adapted to provide a Herriott cell for the first light path (43) from the first light source (21) to the first light sensor (31); and wherein the gas cell (10) is further adapted to provide a Pfund cell for the second light path (44) from the second light source (22) to the second light sensor (32).

2. Device according to claim 1, wherein the device is adapted

   to perform a tunable diode laser spectroscopy, TDLS, measurement using the first light source (21) and the first light sensor (31); and
   to perform a non-dispersive infrared, NDIR, or non-dispersive ultraviolet, NDUV, measurement using the second light source (22) and the second light sensor (32); and
   wherein both (i) the TDLS measurement and (ii) the NDIR or NDUV measurement are performed in the same gas cell (10) on the same measurement gas (11).

3. Device according to any of the preceding claims, wherein the gas cell (10) is a multipass cell comprising a first reflective surface (51) and a second reflective surface (52), wherein the first and second reflective surface face each other; in particular, wherein the multipass gas cell comprises a first spherical mirror (53) providing the first reflective surface (51) and a second spherical mirror (54) providing the second reflective surface (52), wherein the first and second spherical mirror face each other.

4. Device according to claim 3, wherein the first reflective surface (51) and the second reflective surface (52) are shared by the first and second optical paths (43, 44).

5. Device according to claim 3 or 4, wherein the first optical path (43) comprises multiple reflections at the first reflective surface (51) and multiple reflections at the second reflective surface (52); and wherein the second optical path (44) comprises at least one reflection at the first reflective surface (51) and at least one reflection at the second reflective surface (52).

6. Device according to any of claims 3 to 5,

wherein the first reflective surface (51) comprises a first aperture (55) adapted to pass first light (41) from the first light source (21) and a second aperture (56) adapted to pass second light (42) from the second light source (22); and wherein the second aperture (56) is arranged at a center of the first reflective surface (51); and wherein the first aperture (55) is arranged decentered with respect to the first reflective surface (51); and/or
wherein the second reflective surface (52) comprises a third aperture (57) adapted to pass first light (41) from the first light source (21) and a fourth aperture (58) adapted to pass second light (42) from the second light source (22); and wherein the fourth aperture (58) is arranged at a center of the second reflective surface (52); and wherein the third aperture (57) is arranged decentered with respect to the second reflective surface (52).

7. Device according to claim 6, wherein the first and/or third aperture (55, 57) comprises a window (15, 17) transparent for the first light (41) and reflective for the second light (42).

8. Device according to any of the preceding claims, wherein the first light source (21) is arranged at a first side of the gas cell (10) and wherein the second light source (22) is arranged at a second side of the gas cell (10); in particular wherein the second light sensor (32) is arranged at the first side of the gas cell and wherein the first light sensor (31) is arranged at the second side of the gas cell.

9. Device according to any of the preceding claims, wherein the first optical path (43) and the second optical path (44) cross each other in the gas cell (10).

10. Device according to any of the preceding claims, wherein the first optical path (43) is at least 3 times longer, in particular at least 5 times longer, in particular at least 8 times longer than the second optical path (44).

11. Device according to any of the preceding claims, wherein the Pfund cell comprises a first reflective surface (51) and a second reflective surface (52) facing each other; and wherein the Pfund cell is configured such that a focal point of at least one of the reflective surfaces forming the Pfund cell is behind the surface of the opposite reflective surface forming the Pfund cell, in particular wherein the focal point is located outside the gas cell (10).

12. System (2) for optical gas analysis, the system comprising:

- a device (1) as claimed in any of the preceding claims; and
- an analyzer (81), wherein the analyzer is adapted to determine at least one gas concentration of at least one component of the measurement gas (11) based on the light detected by the first light sensor (31) and the light detected by the second light sensor (32).

13. System according to claim 12, wherein the analyzer is adapted to determine the at least one gas concentration of at least one component of the measurement gas (11) by correcting a gas concentration determined based on the light detected by the first light sensor (31) or the second light sensor (32) based on the light detected by the respective other light sensor.

14. A method for optical gas analysis, the method comprising the steps of:

- providing a gas cell (10) with a measurement gas (11) (S101);
- emitting first light (41) from a coherent first light source (21) into the gas cell (S102);
- emitting second light (42) from an incoherent second light source (22) into the same gas cell (S103);
- detecting the first light after passing on a first optical path through the measurement gas (11) in the gas cell (10) with a first light sensor (31) (S104); and
- detecting the second light after passing on a second optical path through the measurement gas (11) in the same gas cell with (10) a second light sensor (32) (S105);
**characterized in that** the gas cell (10) is adapted to provide a Herriott cell for the first light path (43) from the first light source (21) to the first light sensor (31); and wherein the gas cell (10) is further adapted to provide a Pfund cell for the second light path (44) from the second light source (22) to the second light sensor (32).

**Patentansprüche**

1. Vorrichtung (1) zur optischen Gasanalyse, wobei die Vorrichtung aufweist:

   - eine Gaszelle (10) für ein Messgas (11);
   - eine erste Lichtquelle (21), wobei die erste Lichtquelle eine kohärente Lichtquelle ist und wobei die erste Lichtquelle dazu ausgebildet ist, erstes Licht (41) in die Gaszelle zu emittieren;
   - eine zweite Lichtquelle (22), wobei die zweite Lichtquelle eine inkohärente Lichtquelle ist und wobei die zweite Lichtquelle dazu ausgebildet ist, zweites Licht (42) in die Gaszelle zu emittieren;
   - einen ersten Lichtsensor (31), wobei der erste Lichtsensor dazu ausgebildet und angeordnet ist, das erste Licht zu empfangen, nachdem es einen ersten optischen Pfad durch das Messgas (11) in der Gaszelle (10) zurückgelegt hat; und
   - einen zweiten Lichtsensor (32), wobei der zweite Lichtsensor dazu ausgebildet und angeordnet ist, das zweite Licht zu empfangen, nachdem es einen zweiten optischen Pfad durch dasselbe Messgas (11) in derselben Gaszelle (10) zurückgelegt hat;
   **dadurch gekennzeichnet, dass** die Gaszelle (10) dazu ausgebildet ist, eine Herriott-Zelle für den ersten Lichtpfad (43) von der ersten Lichtquelle (21) zu dem ersten Lichtsensor (31) bereitzustellen; und wobei die Gaszelle (10) ferner dazu ausgebildet ist, eine Pfund-Zelle für den zweiten Lichtpfad (44) von der zweiten Lichtquelle (22) zu dem zweiten Lichtsensor (32) bereitzustellen.

2. Vorrichtung nach Anspruch 1, wobei die Vorrichtung dazu ausgebildet ist

   eine abstimmbaren Diodenlaserspektroskopie- (Tunable Diode Laser Spectroscopy, TDLS) Messung unter Verwendung der ersten Lichtquelle (21) und des ersten Lichtsensors (31) auszuführen; und
   eine nichtdispersiven Infrarot- (NDIR, non-dispersive infrared) oder einer nichtdispersiven Ultraviolett- (NDUV, non-dispersive ultraviolet) Messung unter Verwendung der zweiten Lichtquelle (22) und des zweiten Lichtsensors (32) auszuführen; und
   wobei sowohl (i) die TDLS-Messung als auch (ii) die NDIR- oder NDUV-Messung in derselben Gaszelle (10) an demselben Messgas (11) ausgeführt werden.

3. Vorrichtung nach einem der Ansprüche, wobei die Gaszelle (10) eine Multipass-Zelle ist, die eine erste reflektierende Oberfläche (51) und eine zweite reflektierende Oberfläche (52) aufweist, wobei die erste und die zweite reflektierende Oberfläche einander gegenüberliegen; insbesondere wobei die Multipass-Gaszelle einen ersten sphärischen Spiegel (53), der die erste reflektierende Oberfläche (51) bereitstellt, und einen zweiten sphärischen Spiegel (54), der die zweite reflektierende Oberfläche (52) bereitstellt, aufweist, wobei der erste und der zweite sphärische Spiegel einander gegenüberliegen.

4. Vorrichtung nach Anspruch 3, wobei die erste reflektierende Oberfläche (51) und die zweite reflektierende Oberfläche (52) vom dem ersten und dem zweiten optischen Pfad (43, 44) gemeinsam genutzt werden.

5. Vorrichtung nach Anspruch 3 oder 4, wobei der erste optische Pfad (43) mehrere Reflexionen an der ersten reflektierenden Oberfläche (51) und mehrere Reflexionen an der zweiten reflektierenden Oberfläche (52) aufweist; und wobei der zweite optische Pfad (44) zumindest eine Reflexion an der ersten reflektierenden Oberfläche (51) und zumindest eine Reflexion an der zweiten reflektierenden Oberfläche (52) aufweist.

6. Vorrichtung nach einem der Ansprüche 3 bis 5,

   wobei die erste reflektierende Oberfläche (51) eine erste Öffnung (55), die dazu ausgebildet ist, erstes Licht (41) von der ersten Lichtquelle (21) durchzulassen, und eine zweite Öffnung (56), die dazu ausgebildet ist, zweites Licht (42) von der zweiten Lichtquelle (22) durchzulassen, aufweist; und wobei die zweite Öffnung (56) in der Mitte der ersten reflektierenden Oberfläche (51) angeordnet ist;
   und wobei die erste Öffnung (55) in Bezug auf die erste reflektierende Oberfläche (51) außermittig angeordnet ist; und/oder
   wobei die zweite reflektierende Oberfläche (52) eine dritte Öffnung (57), die dazu ausgebildet ist, erstes Licht (41) von der ersten Lichtquelle (21) durchzulassen, und eine vierte Öffnung (58), die dazu ausgebildet ist, zweites Licht (42) von der zweiten Lichtquelle (22) durchzulassen, aufweist; und wobei die vierte Öffnung (58) in der Mitte der zweiten reflektierenden Oberfläche (52) angeordnet ist; und wobei die dritte Öffnung (57) in Bezug auf die zweite reflektierende Oberfläche (52) außermittig angeordnet ist.

7. Vorrichtung nach Anspruch 6, wobei die erste und/oder dritte Öffnung (55, 57) ein Fenster (15, 17) aufweist, das für das erste Licht (41) transparent und für das zweite Licht (42) reflektierend ist.

8. Vorrichtung nach einem der vorhergehenden Ansprüche, wobei die erste Lichtquelle (21) an einer ersten Seite der Gaszelle (10) angeordnet ist und wobei die zweite Lichtquelle (22) an einer zweiten Seite der Gaszelle (10) angeordnet ist; insbesondere wobei der zweite Lichtsensor (32) an der ersten Seite der Gaszelle angeordnet ist und wobei der erste Lichtsensor (31) an der zweiten Seite der Gaszelle angeordnet ist.

9. Vorrichtung nach einem der vorhergehenden Ansprüche, wobei sich der erste optische Pfad (43) und der zweite optische Pfad (44) in der Gaszelle (10) kreuzen.

10. Vorrichtung nach einem der vorhergehenden Ansprüche, wobei der erste optische Pfad (43) mindestens dreimal länger, insbesondere mindestens fünfmal länger, insbesondere mindestens achtmal länger als der zweite optische Pfad (44) ist.

11. Vorrichtung nach einem der vorhergehenden Ansprüche, wobei die Pfund-Zelle eine erste reflektierende Oberfläche (51) und eine zweite reflektierende Oberfläche (52) aufweist, die einander gegenüberliegen; und wobei die Pfund-Zelle so ausgebildet ist, dass ein Brennpunkt zumindest einer der reflektierenden Oberflächen, die die Pfund-Zelle bilden, hinter der Oberfläche der gegenüberliegenden reflektierenden Oberfläche liegt, die die Pfund-Zelle bildet, insbesondere wobei der Brennpunkt außerhalb der Gaszelle (10) angeordnet ist.

12. System (2) zur optischen Gasanalyse, wobei das System aufweist:

- eine Vorrichtung (1) nach einem der vorstehenden Ansprüche; und
- einen Analysator (81), wobei der Analysator dazu ausgebildet ist, zumindest eine Gaskonzentration von mindestens einer Komponente des Messgases (11) basierend auf dem vom ersten Lichtsensor (31) detektierten Licht und dem vom zweiten Lichtsensor (32) detektierten Licht zu bestimmen.

13. System nach Anspruch 12, wobei der Analysator dazu ausgebildet ist, die zumindest eine Gaskonzentration von mindestens einer Komponente des Messgases (11) zu bestimmen, indem eine basierend auf dem vom ersten Lichtsensor (31) oder vom zweiten Lichtsensor (32) detektierten Licht bestimmte Gaskonzentration basierend auf dem vom jeweils anderen Lichtsensor detektierten Lichts korrigiert wird.

14. Verfahren zur optischen Gasanalyse, wobei das Verfahren die folgenden Schritte aufweist:

- Bereitstellen einer Gaszelle (10) mit einem Messgas (11) (S101);
- Emittieren von erstem Licht (41) aus einer kohärenten ersten Lichtquelle (21) in die Gaszelle (S102);
- Emittieren von zweitem Licht (42) von einer inkohärenten zweiten Lichtquelle (22) in dieselbe Gaszelle (S103);
- Detektieren des ersten Lichts nach dem Durchlaufen eines ersten optischen Pfades durch das Messgas (11) in der Gaszelle (10) mit einem ersten Lichtsensor (31) (S104); und
- Detektieren des zweiten Lichts nach Durchlaufen eines zweiten optischen Pfades durch das Messgas (11) in derselben Gaszelle (10) mit einem zweiten Lichtsensor (32) (S105); **dadurch gekennzeichnet, dass** die Gaszelle (10) dazu ausgebildet ist, eine Herriott-Zelle für den ersten Lichtpfad (43) von der ersten Lichtquelle (21) zu dem ersten Lichtsensor (31) bereitzustellten und wobei die Gaszelle (10) ferner dazu ausgebildet ist, eine Pfund-Zelle für den zweiten Lichtpfad (44) von der zweiten Lichtquelle (22) zu dem zweiten Lichtsensor (32) bereitzustellen.

## Revendications

1. Dispositif (1) permettant l'analyse optique de gaz, le dispositif comprenant :

- une cellule à gaz (10) pour un gaz de mesure (11) ;
- une première source lumineuse (21), dans lequel la première source lumineuse est une source lumineuse cohérente et dans lequel la première source lumineuse est conçue pour émettre une première lumière (41) dans la cellule à gaz ;
- une seconde source lumineuse (22), dans lequel la seconde source lumineuse est une source lumineuse incohérente et dans lequel la seconde source lumineuse est conçue pour émettre une seconde lumière (42) dans la cellule à gaz ;
- un premier détecteur de luminosité (31), dans lequel le premier détecteur de luminosité est conçu et agencé pour recevoir la première lumière après passage sur un premier chemin optique à travers le gaz de mesure (11) dans la cellule à gaz (10) ; et
- un second détecteur de luminosité (32), dans lequel le second détecteur de luminosité est conçu et agencé pour recevoir la seconde lumière après passage sur un second chemin optique à travers le même gaz de mesure (11) dans la même cellule à gaz (10) ; **caractérisé en ce que** la cellule à gaz (10) est conçue pour fournir une cellule de Herriott pour le premier chemin lumineux (43) de la première source lumineuse (21) au premier détecteur de luminosité (31) ; et dans lequel la cellule à gaz (10) est en outre conçue pour fournir une cellule Pfund pour le second chemin lumineux (44) de la seconde source lumineuse (22) au second détecteur de luminosité (32).

2. Dispositif selon la revendication 1, dans lequel le dispositif est conçu

   pour réaliser une mesure par spectroscopie laser à diode accordable, TDLS, à l'aide de la première source lumineuse (21) et du premier détecteur de luminosité (31) ; et
   pour réaliser une mesure d'infrarouge non dispersif, NDIR, ou d'ultraviolet non dispersif, NDUV, à l'aide de la seconde source lumineuse (22) et du second détecteur de luminosité (32) ; et
   dans lequel (i) la mesure TDLS et (ii) la mesure NDIR ou NDUV sont toutes deux réalisées dans la même cellule à gaz (10) sur le même gaz de mesure (11).

3. Dispositif selon l'une quelconque des revendications précédentes, dans lequel la cellule à gaz (10) est une cellule à passages multiples comprenant une première surface réfléchissante (51) et une seconde surface réfléchissante (52), dans lequel la première et la seconde surface réfléchissante se font face ; en particulier, dans lequel la cellule à gaz à passages multiples comprend un premier miroir sphérique (53) fournissant la première surface réfléchissante (51) et un second miroir sphérique (54) fournissant la seconde surface réfléchissante (52), dans lequel le premier et le second miroir sphérique se font face.

4. Dispositif selon la revendication 3, dans lequel la première surface réfléchissante (51) et la seconde surface réfléchissante (52) sont partagées par les premier et second chemins optiques (43, 44).

5. Dispositif selon la revendication 3 ou 4, dans lequel le premier chemin optique (43) comprend des réflexions multiples au niveau de la première surface réfléchissante (51) et des réflexions multiples au niveau de la seconde surface réfléchissante (52) ; et dans lequel le second chemin optique (44) comprend au moins une réflexion au niveau de la première surface réfléchissante (51) et au moins une réflexion au niveau de la seconde surface réfléchissante (52).

6. Dispositif selon l'une quelconque des revendications 3 à 5,

   dans lequel la première surface réfléchissante (51) comprend une première ouverture (55) conçue pour laisser passer la première lumière (41) provenant de la première source lumineuse (21) et une deuxième ouverture (56) conçue pour laisser passer la seconde lumière (42) provenant de la seconde source lumineuse (22) ; et dans lequel la deuxième ouverture (56) est agencée au centre de la première surface réfléchissante (51) ; et dans lequel la première ouverture (55) est décentrée par rapport à la première surface réfléchissante (51) ; et/ou la seconde surface réfléchissante (52) comprend une troisième ouverture (57) conçue pour laisser passer la première lumière (41) provenant de la première source lumineuse (21) et une quatrième ouverture (58) conçue pour laisser passer la seconde lumière (42) provenant de la seconde source lumineuse (22) ; et dans lequel la quatrième ouverture (58) est agencée au centre de la seconde surface réfléchissante (52) ; et dans lequel la troisième ouverture (57) est décentrée par rapport à la seconde surface réfléchissante (52).

7. Dispositif selon la revendication 6, dans lequel la première et/ou la troisième ouverture (55, 57) comprend une fenêtre (15, 17) transparente pour la première lumière (41) et réfléchissante pour la seconde lumière (42).

8. Dispositif selon l'une quelconque des revendications précédentes, dans lequel la première source lumineuse (21) est agencée au niveau d'un premier côté de la cellule à gaz (10) et dans lequel la seconde source lumineuse (22) est agencée au niveau d'un second côté de la cellule à gaz (10) ; en particulier, dans lequel le second détecteur de luminosité (32) est agencé au niveau du premier côté de la cellule à gaz et dans lequel le premier détecteur de luminosité (31) est agencé au niveau du second côté de la cellule à gaz.

9. Dispositif selon l'une quelconque des revendications précédentes, dans lequel le premier chemin optique (43) et le second chemin optique (44) se croisent dans la cellule à gaz (10).

10. Dispositif selon l'une quelconque des revendications précédentes, dans lequel le premier chemin optique (43) est au moins 3 fois plus long, en particulier au moins 5 fois plus long, en particulier au moins 8 fois plus long que le second chemin optique (44).

11. Dispositif selon l'une quelconque des revendications précédentes, dans lequel la cellule Pfund comprend une première surface réfléchissante (51) et une seconde surface réfléchissante (52) se faisant face ; et dans lequel la cellule Pfund est configurée de telle sorte qu'un point focal d'au moins une des surfaces réfléchissantes formant la cellule Pfund se trouve derrière la surface de la surface réfléchissante opposée formant la cellule Pfund, en particulier dans lequel le point focal est situé à l'extérieur de la cellule à gaz (10).

**12.** Système (2) permettant l'analyse optique de gaz, le système comprenant :

- un dispositif (1) selon l'une quelconque des revendications précédentes ; et
- un analyseur (81), dans lequel l'analyseur est conçu pour déterminer au moins une concentration de gaz d'au moins un composant du gaz de mesure (11) sur la base de la lumière détectée par le premier détecteur de luminosité (31) et de la lumière détectée par le second détecteur de luminosité (32).

**13.** Système selon la revendication 12, dans lequel l'analyseur est conçu pour déterminer l'au moins une concentration de gaz d'au moins un composant du gaz de mesure (11) en corrigeant une concentration de gaz déterminée sur la base de la lumière détectée par le premier détecteur de luminosité (31) ou le second détecteur de luminosité (32) sur la base de la lumière détectée par l'autre détecteur de luminosité respectif.

**14.** Procédé permettant l'analyse optique de gaz, le procédé comprenant les étapes consistant à :

- fournir à une cellule à gaz (10) un gaz de mesure (11) (S101) ;
- émettre une première lumière (41) à partir d'une première source lumineuse cohérente (21) dans la cellule à gaz (S102) ;
- émettre une seconde lumière (42) à partir d'une seconde source lumineuse incohérente (22) dans la même cellule à gaz (S103) ;
- détecter la première lumière après passage sur un premier chemin optique à travers le gaz de mesure (11) dans la cellule à gaz (10) à l'aide d'un premier détecteur de luminosité (31) (S104) ; et
- détecter la seconde lumière après passage sur un second chemin optique à travers le gaz de mesure (11) dans la même cellule à gaz (10) avec un second détecteur de luminosité (32) (S105) ;
**caractérisé en ce que** la cellule à gaz (10) est conçue pour fournir une cellule de Herriott pour le premier chemin lumineux (43) de la première source lumineuse (21) au premier détecteur de luminosité (31) ; et dans lequel la cellule à gaz (10) est en outre conçue pour fournir une cellule Pfund pour le second chemin lumineux (44) de la seconde source lumineuse (22) au second détecteur de luminosité (32).

**Fig. 1**

**Fig. 2**

Fig. 3

Fig. 4

Fig. 5

**Fig. 6**

**Fig. 7**

**Fig. 8**

**Fig. 9**

**Fig. 10**

**Fig. 11**

100

S101

S102

S103

S104

S105

S106

Fig. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102010050626 B4
- DE 102009025147 B3
- CN 115372300 A
- CN 112748084 A

**Non-patent literature cited in the description**

- **HODGKINSON et al.** Optical gas sensing: a review.. *Measurement Science and Technology*, 2013, vol. 24